## Europäisches Patentamt
## European Patent Office
## Office européen des brevets

(11) Veröffentlichungsnummer: **0 087 050**
**A1**

(12) **EUROPÄISCHE PATENTANMELDUNG**

(21) Anmeldenummer: 83101137.4

(22) Anmeldetag: 07.02.83

(51) Int. Cl.³: **C 12 C 1/04**
**B 65 G 65/32, B 65 G 29/00**

(30) Priorität: 12.02.82 DE 3204924

(43) Veröffentlichungstag der Anmeldung:
31.08.83 Patentblatt 83/35

(84) Benannte Vertragsstaaten:
BE DE FR GB NL

(71) Anmelder: Bühler-MIAG GmbH
Ernst-Amme-Strasse 19 Postfach 33 69
D-3300 Braunschweig(DE)

(72) Erfinder: Amelung, Kurt
Heerstrasse 11
D-3301 Denstorf(DE)

(54) Ringkammerförderer für Schüttgut, insbesondere Braugerste bzw. Grünmalz.

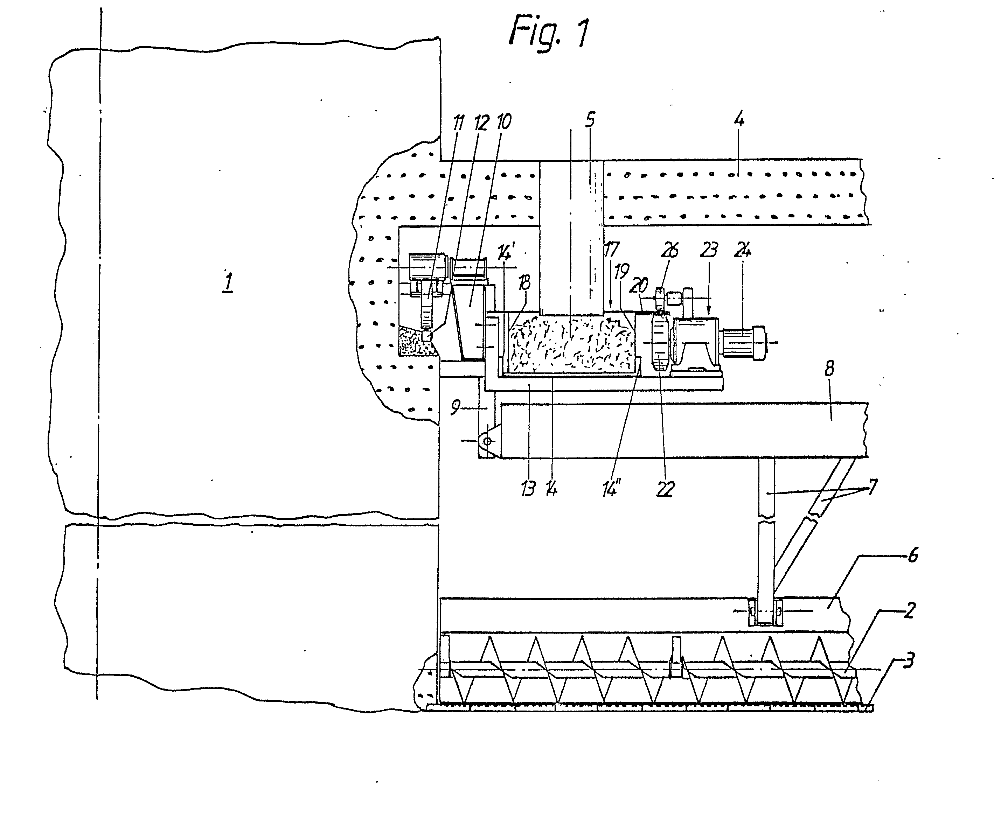

(57) Ein Ringkammerförderer befördert empfindliches Schüttgut schonend von einer ortsfesten Gutzufuhrstelle (5) in den Bereich eines über einer Hordenfläche (3) langsam umlaufenden Gutbehandlungswerkzeuges (2) derart, daß der Gutaustritt sich mit dem Gutbehandlungswerkzeug (2) bewegt. Der Förderer besteht aus einem synchron mit dem Gutbehandlungswerkzeug (2) umlaufenden, ringförmigen Tragring (14, 14', 14") und einem auf diesem mit wesentlich höherer Umdrehungszahl umlaufenden, aus zwei Ringwänden (18, 19) und diese unter Kammerbildung miteinander verbindenden Wänden (21) gebildeten Förderring (17). Durch eine Gutdurchfallöffnung (16) in dem Tragring (14) im Bereich des Gutbehandlungswerkzeuges (2) gelangt das Gut an die gewünschte Stelle (Fig. 1, 2 und 3).

EP 0 087 050 A1

./...

Fig. 1

Titel:  Ringkammerförderer für Schüttgut, insbesondere
        Braugerste bzw. Grünmalz

Technisches Gebiet

Die Erfindung bezieht sich auf einen horizontalen Ringkammerförderer zum schonenden Befördern von Schüttgut,
insbesondere Braugerste bzw. Grünmalz, von einer ortsfesten Gutzufuhrstelle in den Bereich eines über einer
Hordenfläche langsam umlaufenden Gutbehandlungswerkzeuges.

Zugrundeliegender Stand der Technik

In Mälzereien besteht die Aufgabe, gegen mechanische Beanspruchungen empfindliches Gut wie geweichte Braugerste oder
Grünmalz in möglichst gleichmäßiger Höhen- und Flächenverteilung auf Keim- bzw. Darrhorden aufzubringen und nach
erfolgter Behandlung wieder abzuführen. Dies geschieht in
sogenannten Rund- oder auch Turmmälzereien mit feststehenden, kreisringförmigen Horden häufig mit Gutbehandlungswerkzeugen in Form von Be- bzw. Entladeschnecken, die sich
radial über die kreisringförmige Hordenfläche erstrecken
und meist um eine Mittelsäule herum eine fahrstrahlartige
Bewegung über der Hordenfläche ausführen. Hierbei befinden sich diese Schnecken darüber hinaus in Rotation um
ihre eigene Achse, wodurch insgesamt eine gleichförmige
Gutverteilung auf der Horde erreicht wird.

Meist wird zum Zwecke des Beladens der Horde das Gut nahe
der Mittelsäule über eine ortsfeste Schurre o.ä. eingespeist, woraufhin es beim Durchgang der Gutwechselschnecke
von dieser erfaßt und zum Außenrand der Horde hin verteilt
wird.

- 2 -

0087050

Es leuchtet ein, daß es bei dieser Art der Hordenbeladung zu Gutanhäufungen vor Erfassung durch die Gutwechselschnecke und damit schon unter dem Eigengewicht des empfindlichen Gutes zu partiellen Verdichtungen innerhalb desselben kommen kann, die sich in einer unerwünschten, ungleichmäßigen Malzqualität bzw. nach dem Darren in einer unzureichenden Abtrocknung in gewissen Bereichen der Gutschicht auswirken.

Zur Eindämmung dieser nachteiligen Auswirkungen ist bereits vorgeschlagen worden, das Gut stets an derjenigen Stelle zuzuspeisen, an der sich die Gutwechselschnecke gerade befindet, das heißt, die Gutzufuhrstelle praktisch an der Umlaufbewegung der Schnecke teilnehmen zu lassen. Eine hierzu vorgeschlagene Einrichtung besteht aus einem um die Mittelsäule herum angeordneten Ringtrog, in den das Gut über ein ortsfestes Zuführrohr oder dergleichen gelangt. Dieser Ringtrog weist einen um die Mittelsäule oberhalb der Gutwechselschnecke drehbar angetriebenen kreisringförmigen Boden auf sowie je eine hiervon aufragende innere und äußere Ringwand, wobei diese beiden Ringwände mechanisch mit der Gutwechselschnecke verbunden sind und so an deren langsamer Drehbewegung teilnehmen. Zur Abdichtung gegenüber dem Boden sind die Ringwände unten mit Dichtungsschürzen versehen. An einer unmittelbar vor der Gutwechselschnecke liegenden Stelle ist die äußere Ringwand unterbrochen, und ein schräges Ablenkblech ist dort von der inneren zur äußeren Ringwand geführt, so daß das Gut an dieser Stelle austreten kann. Die eigentliche Transportbewegung des Gutes von der ortsfesten Zufuhrstelle zu der Gutaustrittsöffnung in der äußeren Ringwand wird hierbei durch den kreisringförmigen Boden bewirkt, der vermittels eines Zahnradantriebes wesentlich schneller umläuft als die Ringwände bzw. die Gutwechselschnecke.

Nachteilig an dieser Einrichtung ist zunächst die sich
über die gesamte Troglänge einstellende partielle Gutumwälzung infolge Gutmitnahme an dem sich erheblich
schneller als die Ringwände bewegenden Boden. Zum anderen
bewirkt die erzwungene Gutumlenkung an den Kanten der
Gutaustrittsöffnung quasi ein Herausquetschen des Gutes,
und in beiden Fällen wird das empfindliche, im Falle von
Grünmalz zahlreiche zarte Keime aufweisende Gut in einer
einer guten Malzqualität abträglichen Weise mechanisch
beansprucht. Schließlich ergeben sich insbesondere im
Falle des Transportes geweichter Braugerste, wobei sich
unten Wasser absetzt, erhebliche Probleme im Bereich der
Dichtungsschürzen zwischen den Ringwänden und dem Boden,
indem dort in unerwünschter Weise Gut austritt bzw. sich
festsetzt.

<u>Offenbarung der Erfindung</u>

Ausgehend hiervon bezweckt die Erfindung eine Verbesserung von Einrichtungen der genannten Art in bezug auf
eine weitestgehende Gutschonung, Vermeidung unerwünschten Gutaustritts und Bildung von Gutrückständen sowie
gleichzeitig in bezug auf eine kostensparende Bauweise.

Dies wird erfindungsgemäß bei einer Vorrichtung nach dem
Oberbegriff des Patentanspruches 1 gelöst durch einen
über dem Gutbehandlungswerkzeug angeordneten und mit
diesem gekoppelt umlaufenden Tragring mit einer Gutdurchfallöffnung im Bereich des Gutbehandlungswerkzeuges und
mit inneren und äußeren Bordwänden relativ geringer Höhe
sowie durch einen in dem solcherart gebildeten umlaufenden Ringtrog mit einer größeren Umfangsgeschwindigkeit berührungsfrei umlaufenden, im wesentlichen aus zwei konzentrischen Ringwänden und diese unter Bildung von Kammern miteinander verbindenden Wänden bestehenden bodenlosen Förderring. Aufgrund der neuen Ausgestaltung wird das Gut in vergleichsweise mehr definierter Art ohne Reibung an den Ringwänden in Kammern gefördert, und der Gutaustritt geschieht nicht durch erzwungene Umlenkung, sondern lediglich durch die Schwerkraft des Gutes. Weiterhin sind Dichtungen zwischen dem Förderring und dem Tragring mit ihrer speziellen Problematik entbehrlich, und auch Gutzonen mit sich nach unten absetzender Weichflüssigkeit werden durch die Verbindungswände schnell und sauber in die Gutdurchfallöffnung befördert.

In weiterer vorteilhafter Ausgestaltung der Erfindung sind der Tragring an über seinen Außenumfang hinausragenden Aufnahmen mit Antriebsstationen für den Förderring und die äußere Wand des Förderringes mit einem nach außen gerichteten Trag- bzw. Antriebsflansch versehen, und die Antriebsstationen weisen den Flansch und damit den Förderring sowohl tragende als auch antreibende Treibräder auf. Damit sind in den Antriebsstationen zwei Funktionen vereint, und gleichzeitig werden die bei Zahnrad- bzw. Zahnstangenantrieben möglichen Störungen durch eindringendes Gut sowie die Bildung von unter Hygienegesichtspunkten nicht akzeptablen Schimmelnestern vermieden.

Bei einer weiteren vorteilhaften Ausgestaltung der Erfindung ist innerhalb des Förderringes an seiner inneren und an seiner äußeren Wand außerhalb des Bereiches der Gutzufuhrstelle mindestens je eine Fördertasche in Form einer nach unten freien Öffnung der Ringwände und einer sich in relativ geringem Abstand etwa parallel zu den Ringwänden erstreckenden Trennwand etwa von der Höhe der Ringwände vorgesehen, wobei diese Fördertaschen einander diagonal gegenüberliegen. Hierbei erstrecken sich die Fördertaschen etwa über den Bereich zweier Kammern, und im Zusammenwirken dieser Fördertaschen mit gegen die Bordwände gerichteten Abstreifern ergibt sich in vorteilhafter Weise die Möglichkeit zum Einzug von Gut, das in die Räume zwischen Ring- und Bordwänden gelangt ist, ohne daß es hierzu irgendwelcher Dichtungen bedarf, die angesichts der Guteigenschaften letztlich nicht befriedigen könnten.

Schließlich sind in zweckmäßiger Weiterbildung der Erfindung die Drehrichtungen von Tragring und Förderring im Sinne einer Minimierung der Bewegung innerhalb des Gutes vorzugsweise gleich, und die Umdrehungszahlen von Tragring und Förderring verhalten sich etwa wie 1 : 600, was hohe Leistung und Stetigkeit in der Gutzufuhr auf die Horde bewirkt.

Kurze Beschreibung der Zeichnungen

Die Erfindung wird anhand des in den Zeichnungen dargestellten Ausführungsbeispiels im nachfolgenden näher erläutert. Es zeigen:

Figur 1 den erfindungsgemäßen Ringkammerförderer in einer Schnittdarstellung;

Figur 2 in Draufsicht schematisch den Tragring des Ringkammerförderers;

Figur 3 den Ringkammerförderer in vereinfachter Darstellung in der Draufsicht, und

Figur 4 einen Schnitt (schematisch) entlang der Linie IV-IV in Figur 3 in vergrößerter Darstellung.

Ausführliche Beschreibung der Zeichnungen

In Figur 1 bewegt sich um eine ortsfeste, zylindrische Mittelsäule 1 einer Rundmälzerei ein Gutbehandlungswerkzeug 2 in Form einer Be- und Entladeschnecke kreisend über dem Hordenboden 3, wodurch bei der Hordenbeladung das über das in einer Gebäudezwischendecke 4 angeordnete Rohr 5 zugeführte Gut gleichmäßig auf dem Hordenboden 3 verteilt wird.

Das Gutbehandlungswerkzeug 2 ist mittels eines Schneckenträgers 6 und eines Mitnehmer- bzw. Hubgestänges 7 an einem Tragbalken 8 geführt, wobei der nicht dargestellte Antrieb für die kreisende Bewegung dieser Teile am Außenrand der Horde erfolgt. Es versteht sich, daß das Gutbehandlungswerkzeug 2 mit zunehmender Hordenbeschickung aus der gezeichneten untersten Stellung mittels des Gestänges 7 und anderer, nicht dargestellter Mittel, auf ein höheres Niveau entsprechend der Schichthöhe des Gutes gelangt.

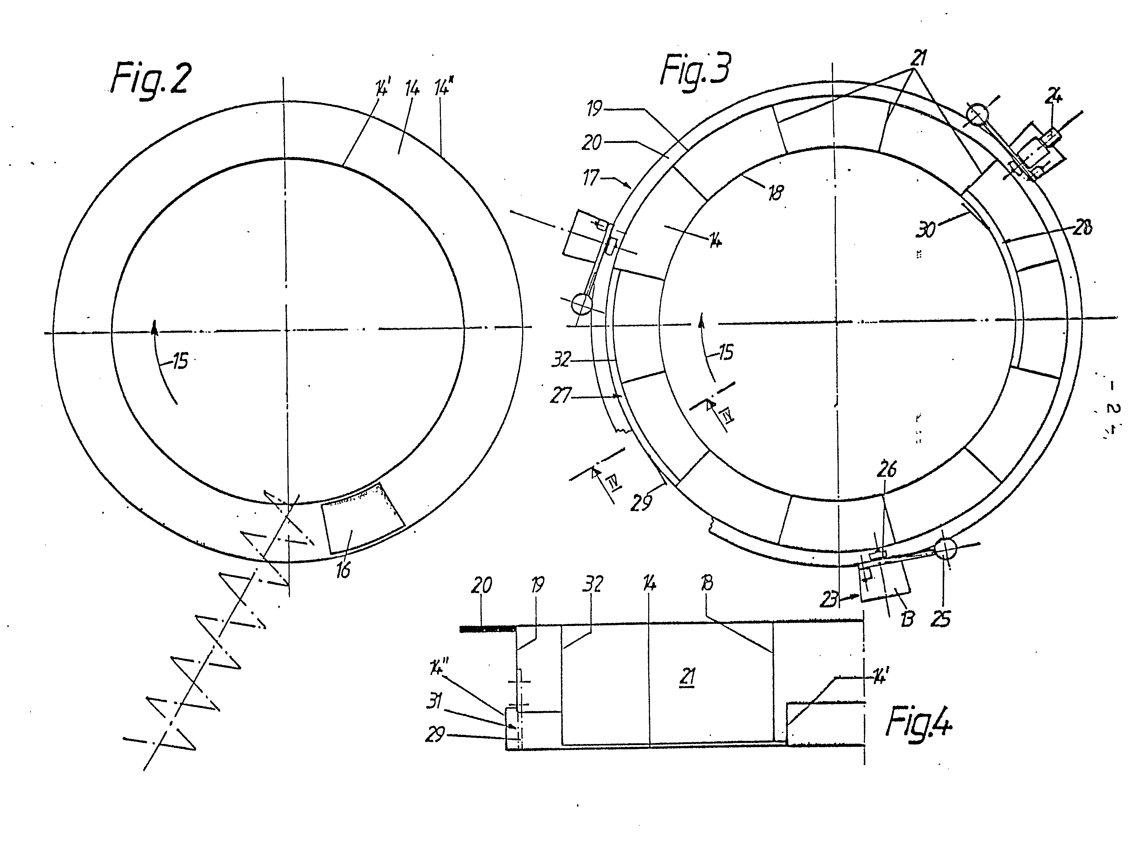

Im Bereich der Mittelsäule 1 ist der Tragbalken 8 über ein Verbindungsglied 9 mit einem Ring 10 fest verbunden, der von Rollen 11 getragen wird, die ihrerseits auf einer kreisringförmig um die Mittelsäule herum verlegten Schiene 12 laufen. Bei Antrieb des Gutbehandlungswerkzeuges 2 bzw. des Tragbalkens 8 vom äußeren Hordenrand läuft mithin der Ring 10 mit der gleichen Winkelgeschwindigkeit um die Mittelsäule 1 um. Auf mehreren mit dem Ring 10 fest verbundenen Tragwinkeln 13 ist ein Tragring 14 mit kreisringförmiger Bodenfläche und einer inneren Bordwand 14' sowie einer äußeren Bordwand 14" relativ geringer Höhe befestigt. Der Tragring 14 bildet mithin einen Ringtrog, der mit dem Gutbehandlungswerkzeug 2 und den mit diesem verbundenen Teilen um die Mittelsäule 1 umläuft. Im Bereich des Gutbehandlungswerkzeuges 2 und in Richtung des die Drehrichtung angebenden Pfeiles 15 (Figur 2) vor ersterem ist der Tragring 14 mit einer Gutdurchfallöffnung 16 versehen.

Über der Bodenfläche des Tragringes 14 und innerhalb seiner Bordwände 14', 14" ist ein Förderring 17 vorgesehen, der aus einer inneren Ringwand 18, einer äußeren Ringwand 19 mit einem Trag- bzw. Antriebsflansch 20 und einer Vielzahl von die beiden Ringwände 18, 19 miteinander unter Kammerbildung verbindenden Wänden 21 besteht (Figur 1, 3).

Der Förderring 17 ruht mittels seines Flansches 20 auf Antriebsrädern 22 von vorzugsweise gleichmäßig am Umfang des Ringkammerförderers angeordneten Antriebsstationen 23 derart, daß weder die Ringwände 18, 19 noch die Wände 21 den Tragring 14 bzw. dessen Bordwände 14', 14" berühren, gleichwohl aber insbesondere der Abstand zwischen der Bodenfläche des Tragringes 14 und den Kammerwänden 21 im Sinne einer möglichst vollständigen Mitnahme des Gutes minimal ist.

Die Antriebsstationen 23 sind auf einzelnen, über den Umfang des Tragringes 14 nach außen geführten, verlängerten Tragwinkeln 13 angeordnet. Die Elektromotore 24 erteilen über die Antriebsräder 22 dem Flansch 20 und damit dem Förderring 17 eine erheblich höhere Drehgeschwindigkeit, als sie der Tragring 14 ausführt, so daß das über das Rohr 5 eingespeiste Gut durch den Förderring 17 bzw. dessen Wände zügig auf- und mitgenommen wird. Zur Sicherstellung der Traktion zwischen den Antriebsrädern 22 und dem Flansch 20 sind an den Antriebsstationen 23 mit Gewichten 25 belastete Andruckrollen 26 vorgesehen.

Zur Erfassung von Gut, das unter den Ringwänden 18, 19 hindurch in den Bereich der Bordwände 14', 14" des Tragringes 14 gelangt, sind an dem Förderring 17 eine äußere Fördertasche 27 und eine innere Fördertasche 28 mit Abstreifern 29, 30 vorgesehen, welch letztere an den Bordwänden 14" bzw. 14' entlangstreifen. Wie die Figuren 3 und 4 zeigen, ist die Fördertasche 27 aus einer nach unten freien Öffnung 31 der Ringwand 19 und einer sich in relativ geringem Abstand etwa parallel zu der Ringwand 19 erstreckenden Trennwand 32 gebildet, die höhengleich zu der Ringwand 19 in deren Normalhöhe ausgeführt ist. Durch die Öffnung 31 ragt der Abstreifer 29 hinaus und liegt der Bordwand 14" derart an, daß alles zwischen Bordwand 14" und Ringwand 19 befindliche Gut bei der Drehbewegung des Förderringes 17 in die Fördertasche 27 gelangt. Hierbei erstreckt sich die Fördertasche 27 über den Bereich zweier, durch die Wände 21 gebildeter Kammern des Förderringes 17, wobei die mittlere Wand 21 im Bereich der Fördertasche fehlt.

Die innere Fördertasche 28 ist in analoger Weise ausgebildet, und beide Fördertaschen 27, 28 mit den ihnen zugeordneten Abstreifern 29, 30 bewirken, daß vagabundierendes Gut schnell, gleichmäßig und ohne Bildung von Gutresten in den Bereich der Gutdurchfallöffnung 16 und durch
diese hindurch an seinen Bestimmungsort gelangt.

Patentansprüche

1. Horizontaler Ringkammerförderer zum schonenden Befördern von Schüttgut, insbesondere Braugerste. bzw. Grünmalz, von einer ortsfesten Gutzufuhrstelle (5) in den Bereich eines über einer Hordenfläche (3) langsam umlaufenden Gutbehandlungswerkzeuges (2), gekennzeichnet durch einen über dem Gutbehandlungswerkzeug (2) angeordneten und mit diesem gekoppelt umlaufenden Tragring (14) mit einer Gutdurchfallöffnung (16) im Bereich des Gutbehandlungswerkzeuges (2) und mit inneren und äußeren Bordwänden (14', 14") relativ geringer Höhe sowie durch einen in dem solcherart gebildeten umlaufenden Ringtrog mit einer größeren Umfangsgeschwindigkeit berührungsfrei umlaufenden, im wesentlichen aus zwei konzentrischen Ringwänden (18,19) und diese unter Bildung von Kammern miteinander verbindenden Wänden (21) bestehenden bodenlosen Förderring (17).

2. Horizontaler Ringkammerförderer nach Anspruch 1, dadurch gekennzeichnet, daß der Tragring (14) an über seinen Außenumfang hinausragenden Aufnahmen (13) mit Antriebsstationen (23) für den Förderring (17) versehen ist.

3. Horizontaler Ringkammerförderer nach Anspruch 2, dadurch gekennzeichnet, daß die äußere Wand (19) des Förderringes (17) mit einem nach außen gerichteten Trag- bzw. Antriebsflansch (20) versehen ist.

4. Horizontaler Ringkammerförderer nach Anspruch 3, dadurch gekennzeichnet, daß die Antriebsstationen (23) den Flansch (20) und damit den Förderring (17) sowohl tragende als auch antreibende Treibräder (22) aufweisen.

5. Horizontaler Ringkammerförderer nach Anspruch 4, dadurch gekennzeichnet, daß an den Antriebsstationen (23) gewichtsbelastete, auf die Oberfläche des Flansches (20) wirkende Andruckrollen (26) vorgesehen sind.

6. Horizontaler Ringkammerförderer nach Anspruch 5, dadurch gekennzeichnet, daß innerhalb des Förderringes (17) an seiner inneren und an seiner äußeren Wand (18, 19) außerhalb des Bereiches der Gutzufuhrstelle (5) mindestens je eine Fördertasche (27,28) in Form einer nach unten freien Öffnung (31) der Ringwände (18,19) und einer sich in relativ geringem Abstand etwa parallel zu den Ringwänden (18,19) erstreckenden Trennwand (32) etwa von der Höhe der Ringwände (18,19) vorgesehen ist.

7. Horizontaler Ringkammerförderer nach Anspruch 6, dadurch gekennzeichnet, daß die Fördertaschen (27, 28) an der inneren und an der äußeren Ringwand (18, 19) einander diagonal gegenüberliegen.

8. Horizontaler Ringkammerförderer nach Anspruch 7, dadurch gekennzeichnet, daß die Fördertaschen (27, 28) sich etwa über den Bereich zweier Kammern erstrecken und durch die Wände (21) begrenzt sind, wobei die mittlere dazwischenliegende Wand (21) innerhalb der Fördertaschen (27,28) fehlt.

9. Horizontaler Ringkammerförderer nach Anspruch 8, dadurch gekennzeichnet, daß die Fördertaschen (27, 28) mit federnd gegen die Bordwände (14',14") gerichteten Abstreifern (29,30) zum Einzug in den Räumen zwischen Ringwänden (18,19) und Bordwänden (14',14") befindlichen Gutes versehen sind.

10. Horizontaler Ringkammerförderer nach Anspruch 1 bis 9, dadurch gekennzeichnet, daß die Drehrichtungen von Tragring (14) und Förderring (17) gleich sind.

11. Horizontaler Ringkammerförderer nach Anspruch 1 bis 10, dadurch gekennzeichnet, daß die Umdrehungszahlen von Tragring (14) und Förderring (17) sich etwa wie 1 : 600 verhalten.

Fig. 1

Fig.2

14' 14 14''

15

16

Fig.3

21

19
20
17
18
14
24
30
28

32
27
15
IV

29
IV

26
23
13
25

Fig.4

20 19 32 14 18

14''
31
29
21
14'

0087050

- 24 -

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-C- 916 038 (MIAG VERTRIEBSGESSELSCHAFT MBH) * Seite 1, Zeile 25 - Seite 2, Zeile 32 ; Figuren 1, 2 * | 1 | C 12 C 1/04 B 65 G 65/32 B 65 G 29/00 |
| A | DE-A-2 604 829 (GUSTAV SCHADE MASCHINENFABRIK) * Seite 6, Zeilen 6-10 ; Figuren 2, 3 * | 1 | |
| A | DE-A-2 801 715 (BÜHLER-MIAG GMBH) | | |
| A | DE-U-1 997 278 (FREDENHAGEN KG) | | |
| P,X | DE-U-8 203 837 (BÜHLER-MIAG GMBH) * Ganzes Dokument * | 1-11 | RECHERCHIERTE SACHGEBIETE (Int. Cl. 3) |
| | ----- | | B 65 G 29/00 B 65 G 47/00 B 65 G 65/00 B 65 G 69/00 C 12 C 1/00 C 13 C 13/00 |

Der vorliegende Recherchenbericht wurde für alle Patentansprüche erstellt.

| Recherchenort BERLIN | Abschlußdatum der Recherche 06-05-1983 | Prüfer SIMON J J P |
|---|---|---|